# EUROPÄISCHE PATENTSCHRIFT

(11) **EP 1 224 450 B1**
(45) Veröffentlichungstag und Bekanntmachung des Hinweises auf die Patenterteilung: **29.08.2007**
(21) Anmeldenummer: 00977427.4
(22) Anmeldetag: 23.10.2000
(51) Int. Cl.: G01N 1/06, B06B 1/04

(54) **Mikrotom mit U-förmigem elastischen Schwingungsarm**
Microtome with U-shaped elastic vibrating member
Microtome avec élément vibrant élastique en forme de U

(30) Priorität: 25.10.1999 DE 19951288
(43) Veröffentlichungstag der Anmeldung: 24.07.2002
(73) Patentinhaber: Max-Planck-Gesellschaft zur Förderung der Wissenschaften e.V., 80539 München (DE)
(72) Erfinder: HÄUSSLER, Bernhard, 68753 Waghäusel (DE); RÖDEL, Rolf, 68753 Waghäusel (DE); PAULI, Josef, 69214 Eppelheim (DE)
(74) Vertreter: Hertz, Oliver
(86) Internationale Anmeldenummer: PCT/EP2000/010433
(87) Internationale Veröffentlichungsnummer: WO 2001/031314

(56) Entgegenhaltungen:
- EP-A- 0 216 579
- EP-A- 0 924 503
- DD-A- 156 199
- DE-A- 2 755 479
- DE-A- 19 645 107
- DE-B- 1 267 873
- DE-C- 913 112
- PATENT ABSTRACTS OF JAPAN vol. 006, no. 188 (P-144), 28. September 1982 (1982-09-28) & JP 57 100335 A (TAMURA ISAMU), 22. Juni 1982 (1982-06-22)
- PATENT ABSTRACTS OF JAPAN vol. 1996, no. 01, 31. Januar 1996 (1996-01-31) & JP 07 246367 A (BRIDGESTONE CORP), 26. September 1995 (1995-09-26)

## Beschreibung

Die Erfindung betrifft eine Antriebseinrichtung zur Schwingungserzeugung, insbesondere für Präzisionswerkzeuge und -manipulatoren, wie zum Beispiel einen Antrieb für das Schneidwerkzeug eines Mikrotoms, und ein Mikrotom, das mit einer derartigen Antriebseinrichtung ausgestattet ist.

Herkömmliche Mikrotome zur Erzeugung dünner Gewebeschnitte sind in der Regel mit einem Exzenterantrieb ausgestattet, der eine Schneide in eine horizontale Schwingung versetzt. Mit einer Vortriebseinrichtung wird die schwingende Schneide durch ein zu bearbeitendes Objekt, zum Beispiel Frischgewebe, gefahren, so daß der gewünschte Schnitt vom Objekt abgetrennt wird. Die Verwendung von Exzenterantrieben ist mit mehreren Nachteilen verbunden. Die Schwingungsfrequenz der Schneide ist beschränkt, da mit dem Exzenterantrieb die Massen eines Messerhalter und von Führungen mitbeschleunigt werden müssen. Des weiteren ist auch die Schwingungsamplitude der Schneide durch den Exzenter selbst auf in der Regel rund 1 mm beschränkt. Ein wesentlicher Nachteil bei der Erzeugung von Präzisionsschnitten biologischer Materialien ist durch die Ausbildung vertikaler Bewegungen (Höhenschläge) gegeben, die von der horizontalen Schwingungsrichtung der Schneide abweichen. Der Exzenterantrieb erzeugt bei seinen Umkehrpunkten einen Höhenschlag. Außerdem steigt die vertikale Schwingungsneigung bei höheren Schwingungsfrequenzen, bei denen die wirksamen Kräfte zunehmen. Durch die vertikalen Schwingungen wird das zu bearbeitende Gewebe nicht nur in Vortriebsrichtung getrennt. Es werden auch Zellen in der Gewebeoberfläche verletzt. Damit wird die weitere Untersuchung des Gewebeschnittes erschwert.

Bei einer abgewandelten Bauform eines Mikrotoms, wie es beispielsweise unter der Bezeichnung "Vibracut 3", Hersteller: FTB Feinwerktechnik, kommerziell verfügbar ist, wird der Messerhalter mit einem bewegten Hubmagneten in Schwingung versetzt. Diese Antriebsform ist nachteilig, da die Schwingungsfrequenz der Schneide auf die Resonanzfrequenz des Messerhalters festgelegt ist. Außerdem können wiederum Vertikalschwingungen nicht soweit ausgeschlossen werden, wie es für Präzisionsanwendungen, insbesondere in der Mikrobiologie und Neurologie, erforderlich ist.

Die genannten Probleme beim Schwingungsantrieb einer Mikrotomschneide treten auch bei anderen Präzisionswerkzeugen und -manipulatoren auf, bei denen eine lineare Schwingungsbewegung in einer vorbestimmten Schwingungsrichtung gewünscht ist, während in allen anderen Richtungen keine Ausschlagsbewegungen erfolgen. Dies betrifft beispielsweise Werkzeuge zur Bearbeitung von Mikrosystemen oder mikrochirurgische Instrumente.

EP 0 924 503 A1 offenbart eine Vorrichtung zur Verwendung in einem Ultramikrotom. Die Vorrichtung umfasst einen Block, der mit einer oder zwei Blattfedern an einer Halteeinrichtung befestigt ist, wobei die Blattfeder senkrecht zur Schnittkante einer an dem Block befestigten Diamantschneide angeordnet sind sind. Ein Schwingungserzeuger versetzt den Block in Schwingungen parallel zur Schnittkante.

DE 1 267 873 offenbart ein Mikrotom zum Herstellen von geschnittenen Proben für optische Mikroskope. Das Mikrotom umfasst zwei identische Blattfedern, die beabstandet zueinander angeordnet sind und von einer Halteeinrichtung getragen werden.

DE 913 112 offenbart eine Vorrichtung zur Anfertigung histologischer und zytologischer.Präparate von pflanzlichen und tierischen Objekten mit einem schwingenden Messer, das an zwei symmetrisch angeordneten Blattfedern befestigt ist und mit zwei Elektromagneten bewegt wird.

JP 57100335 A offenbart ebenfalls eine Schneidvorrichtung, die von einem Motor angetrieben wird.

JP 07246367 A offenbart einen Vibrationsgenerator für niedrige Frequenzen, der mit einer Spule und einem Permanentmagneten angetrieben wird.

DD 156 199 offenbart eine Vorrichtung zur Herstellung von Gewebeschnitten in der Medizin und der Biologie. In DD 156 1 99 wird vorgeschlagen, elektromechanische Schwingungserzeuger durch elektroakustische Wandler zu ersetzen, die eine hochfrequente Schwingung erzeugen, mit der ein Mikrotom angetrieben wird.

DE 27 55 479 offenbart ein Mikrotom zum Abschneiden dünner Probenstücke mit einem verschwenkbaren Hebel, mit dem ein Messer angetrieben wird, das einen Prüfling zerteilt.

DE 196 45 107 A1 offenbart ein Mikrotom mit einem oszillierenden Messer, das sich quer zur Schnittvorschubrichtung sich für Schnitte an weichen Gewebeproben bewegt. Die Schwingungsfrequenz wird durch die Drehzahl eines das Messer antreibenden Elektromotors variabel gesteuert. Die Kraftübertragung vom Elektromotor auf das Messer erfolgt über einen Exzenter.

EP 0 216 579 A2 offenbart eine Vorrichtung zur Schwingungskontrolle, wobei die Schwingung durch ein elektromagnetisches Antriebsmittel erzeugt wird.

Es ist die Aufgabe der Erfindung, eine verbesserte Antriebseinrichtung zur Schwingungserzeugung bereitzustellen, mit der die Nachteile der herkömmlichen Antriebe für Präzisionswerk zeuge oder -manipulatoren überwunden werden und die insbesondere eine Schwingungserzeugung in einer vorbestimmten Schwingungsrichtung mit einer einstellbaren Schwingungsfrequenz und Schwingungsamplitude und ohne seitliche Ausschläge ermöglicht. Die Aufgabe der Erfindung ist es auch, ein verbessertes Mikrotom anzugeben, mit dem die Dicke von Gewebeschnitten verringert und die Verletzung von Gewebeteilen außerhalb der Schnittrichtung vermindert werden können.

Diese Aufgaben werden durch eine Antriebseinrichtung, ein Verfahren zum Schwingungsantrieb und ein Mikrotom mit den Merkmalen gemäß den Patentansprüchen 1, 7 bzw. 8 gelöst. Vorteilhafte Ausführungsformen und Anwendungen der Erfindung ergeben sich aus den abhängigen Ansprüchen.

Gemäß einem ersten wichtigen Gesichtspunkt der Erfindung wird insbesondere eine Antriebseinrichtung (Präzisionsschwingungsantrieb) geschaffen, die als Krafterzeuger eine Kombination aus einem Magneten mit unveränderlichem Magnetfeld und einem Magneten mit periodisch veränderlichem Magnetfeld enthält, mit denen ein Kraftübertragungselement relativ zu einem ortsfesten Träger entsprechend einer vorbestimmten Schwingungsrichtung in eine Schwingungsbewegung versetzt werden kann. Das Kraftübertragungselement wird erfindungsgemäß durch einen am Träger angebrachten Schwingarm gebildet, der aus mindestens einem flächigen Streifen aus elastischem Material besteht, das in Schwingungsrichtung biegsam und in allen anderen Richtungen starr oder versteift ist. Der Schwingarm ist erfindungsgemäß als U-Profil geformt. Das offene Ende des U-Profils ist am Träger befestigt und das geschlossene Ende des U-Profils ist in der Profilebene entsprechend der Schwingungsrichtung elastisch verbiegbar. Gemäß einer bevorzugten Ausführungsform der Erfindung ist der Magnet mit dem unveränderlichen Magnetfeld ein Topfmagnet und der Magnet mit dem veränderlichen Magnetfeld eine Tauchspule, die im Topfmagneten angeordnet ist. Die Tauchspule ist am oder nahe dem geschlossenen freien Ende des U-Profils des Kraftübertragungselements befestigt und elektrisch mit einem Schwingungsgenerator verbunden.

Gemäß einem weiteren wichtigen Gesichtspunkt der Erfindung wird der genannte Präzisionsschwingungsantrieb derart betrieben, daß dem Kraftübertragungselement eine erzwungene Schwingung aufgeprägt wird. Die Frequenz und Amplitude der erzwungenen Schwingung ist je nach den gewünschten Bewegungseigenschaften des zu betreibenden Werkzeugs oder Manipulators einstellbar. Gemäß einer bevorzugten Ausführungsform wird zur Frequenz- und Amplitudeneinstellung unter Verwendung eines Biegesensors am Kraftübertragungselement ein Regelkreis implementiert.

Gemäß einem weiteren wichtigen Gesichtspunkt der Erfindung wird ein Mikrotom beschrieben, das mit der oben genannten Antriebseinrichtung ausgestattet ist. Das Kraftübertragungselement dient als Halterung einer Mikrotomschneide. Der ortsfeste Träger des Krafterzeugers bzw. des Kraftübertragungselements ist auf einem Präzisionsvortrieb in Form eines Lineartisches angebracht.

Die Erfindung besitzt die folgenden Vorteile. Die erfindungsgemäße Antriebseinrichtung liefert eine Schwingungsbewegung in einer festen Schwingungsrichtung ohne seitliche Ausschläge, wobei das Kraftübertragungselement ohne mechanische Führungen lediglich durch seine Gestalt, insbesondere seine Profilform, auf die Schwingungsrichtung festgelegt ist. Die Schwingungsfrequenz und -amplitude sind veränderlich und unabhängig voneinander einstellbar. Das erfindungsgemäße Mikrotom zeichnet sich durch einen erheblich verminderten Höhenschlag aus. Damit können Gewebeschnitte mit minimal verletzter Oberfläche erzeugt werden. Die erfindungsgemäße Antriebseinrichtung besitzt einen erweiterten Anwendungsbereich auch außerhalb der Mikrotomanwendung.

Weitere Vorteile und Einzelheiten der Erfindung werden aus der Beschreibung der beigefügten Zeichnungen ersichtlich. Es zeigen:
- Fig. 1:: eine Schnittansicht eines Ausführungsbeispiels der erfindungsgemäßen Antriebseinrichtung,
- Fig. 2:: Einzelheiten des Krafterzeugers der Antriebseinrichtung gemäß Fig. 1,
- Fig. 3:: eine Übersichtsdarstellung eines erfindungsgemäßen Mikrotoms, und
- Fig. 4:: Kurvendarstellungen zur Charakterisierung der Schwingungsbewegung einer Schneide eines erfindungsgemäßen Mikrotoms.

Die Erfindung wird im folgenden unter Bezug auf eine Antriebseinrichtung für ein Mikrotom mit bestimmten Schwingungsparametern der Schneide beschrieben. Die Erfindung ist jedoch weder auf die Mikrotomanwendung noch auf die beispielhaft angegebenen Schwingungsparameter beschränkt.

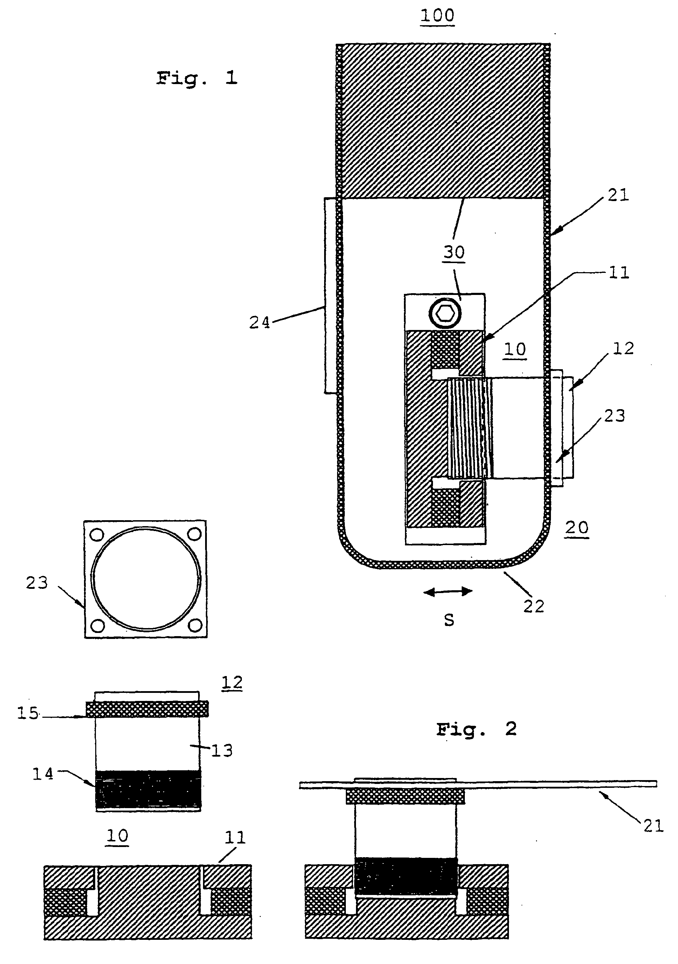

Die erfindungsgemäße Antriebseinrichtung 100 umfaßt gemäß der schematischen Schnittansicht in Fig. 1 einen Krafterzeuger 10 und ein Kraftübertragungselement 20, das in einer vorbestimmten Schwingungsrichtung (Pfeil S) beweglich ist. Der Krafterzeuger umfaßt ein Permanentmagnetteil und ein Spulenteil. Das Permanentmagnetteil wird durch den ortsfest an einem Träger 30 angebrachten Topfmagneten gebildet, dessen Einzelheiten unter Bezug auf Fig. 2 erläutert werden. Das Spulenteil ist eine Tauchspule 12, die in den Topfmagneten 11 hineinragt. Die Tauchspule 12 ist am Kraftübertragungselement 20 befestigt.

Das Kraftübertragungselement 20 wird durch einen Schwingarm 21 gebildet, der an einem Ende am Träger 30 befestigt und am entgegengesetzten Ende 22 frei beweglich ist. Der Schwingarm 21 ist ein U-profilierter Streifen aus einem flächigen elastischen Material. Dies legt die Beweglichkeit des freien Endes 22 auf Verbiegungen in der Schwingungsrichtung S fest. In allen anderen Richtungen, die von der Schwingungsrichtung S (in der Zeichenebene) abweichen, ist der Schwingarm 21 ein starres, relativ zum Träger 30 unbewegliches Gebilde. Am freien Ende 22 oder nahe zu diesem ist die Tauchspule 12 mit einem Befestigungsflansch 23 am Schwingarm 21 befestigt. Der Topfmagnet 11 im U-Profil und die Tauchspule 12 sind so positioniert, daß sie relativ zueinander in Schwingungsrichtung S beweglich sind. Allgemein ist das Kraftübertragungselement 20 als Halterung für ein periodisch zu bewegendes Werkzeug oder einen Manipulator oder einen Werkzeughalter ausgelegt. Hierzu besitzt es anwendungsabhängig am freien Ende 22 Halterungselemente (nicht dargestellt).

Zum Einsatz in einem Mikrotom besitzt die erfindungsgemäße Antriebseinrichtung im wesentlichen die in Fig. 1 dargestellten Dimensionen (Maßstab 1:1). Der Schwingarm besteht beispielsweise aus Aluminiumblech mit einer Breite von rd. 40 mm und einer Dicke von rund 1 bis 2 mm. Die Länge des Schwingarms wird anwendungsabhängig gewählt. Bei einer Länge von rund 10 cm beträgt die Eigenfrequenz des dargestellten Schwingarms 21 mit U-Profil rund 80 Hz. Werden anwendungsabhängig größere oder kleinere Frequenzbereiche (z. B. bei rd. 10 Hz) benötigt, so ist der Schwingarm entsprechend mit einer geringeren oder größeren Länge auszubilden.

Die Teile der Antriebseinrichtung können gemäß abgewandelten Ausführungsformen modifiziert werden. Beim Krafterzeuger ist es möglich, das Spulenteil ortsfest am Träger und das Permanentmagnetteil am Kraftübertragungselement zu befestigen. Ferner ist es möglich, als Permanentmagnetteil einen anders geformten Permanentmagneten oder ebenfalls eine Spule zu verwenden, die mit einem konstanten Anregungsstrom betrieben wird. Schließlich könnte alternativ als Krafterzeuger auch ein Piezoantrieb verwendet werden. Das Kraftübertragungselement kann auch durch ein einzelnes streifenförmiges Blech (siehe rechter Teil von Fig. 2), das nur senkrecht zur Blechebene biegsam und sonst starr ist, oder ein komplexer profiliertes Gebilde mit nur einem Biege-Freiheitsgrad gebildet werden.

Das Bezugszeichen 24 bezieht sich auf ein Piezo-Biegeelement, das ggf. als Sensor am Schwingarm 21 angebracht ist. Mit dem Piezo-Biegeelement 24 kann die aktuelle Schwingungsamplitude des Schwingarms 21 erfaßt werden.

Fig. 2 zeigt Einzelheiten des Krafterzeugers 10 im auseinandergenommenen (linker Teil) bzw. zusammengesetzten (rechter Teil) Zustand. Der Topfmagnet 11 besteht aus hochpermanentem Material (z. B. aus Neodym, B = 1.17 T). Der Aufbau des Topfmagneten entspricht vorzugsweise dem Aufbau eines an sich bekannten Topfmagneten, wie er in Lautsprecher verwendet wird. Die Tauchspule 12 umfaßt einen Spulenträger 13, die Spulenwicklung 14 und einen Spulenflansch 15. Am Schwingarm 21 des Kraftübertragungselements ist der Befestigungsflansch 23 angebracht, an dem die Tauchspule 12 mit dem Spulenflansch 15 befestigt (z. B. verklebt) wird.

Die Tauchspule 12 ist elektrisch mit einer Versorgungseinrichtung verbunden. Diese enthält einen verstellbaren Schwingungsgenerator und einen Leistungsverstärker (Leistung z. B. 25 W). Der Schwingungsgenerator ist dazu ausgelegt, elektrische Schwingungen in einem Frequenzbereich von 30 bis 130 Hz zu erzeugen. Über die Leistung des Leistungsverstärkers läßt sich die Schwingungsamplitude des Schwingarms 21 kontinuierlich im Bereich von 0 bis 1.5 mm einstellen. Ein besonderer Vorteil der Erfindung besteht in der Einstellung erzwungener Schwingungen des Kraftübertragungselements. Bei Anregung mit einer anwendungsabhängig gewählten Frequenz ungleich der Eigenfrequenz des Kraftübertragungselements (mit dem jeweiligen Werkzeug oder Manipulator) sind dessen Schwingungsfrequenz und -amplitude frei einstellbar.

Gemäß einer bevorzugten Ausführungsform der Erfindung ist zur Einstellung der Schwingungsamplitude und/oder -frequenz ein Regelkreis eingerichtet. Als Sensor wird das Piezo-Biegeelement 24 am Schwingarm 21 verwendet. Das Piezo-Biegeelement 24 ist elektrisch mit der Versorgungseinrichtung verbunden. Je nach der aktuellen Schwingungsamplitude des Schwingarms 21 werden zur Einstellung eines bestimmten Zielwerts die Parameter der Versorgungseinrichtung verändert.

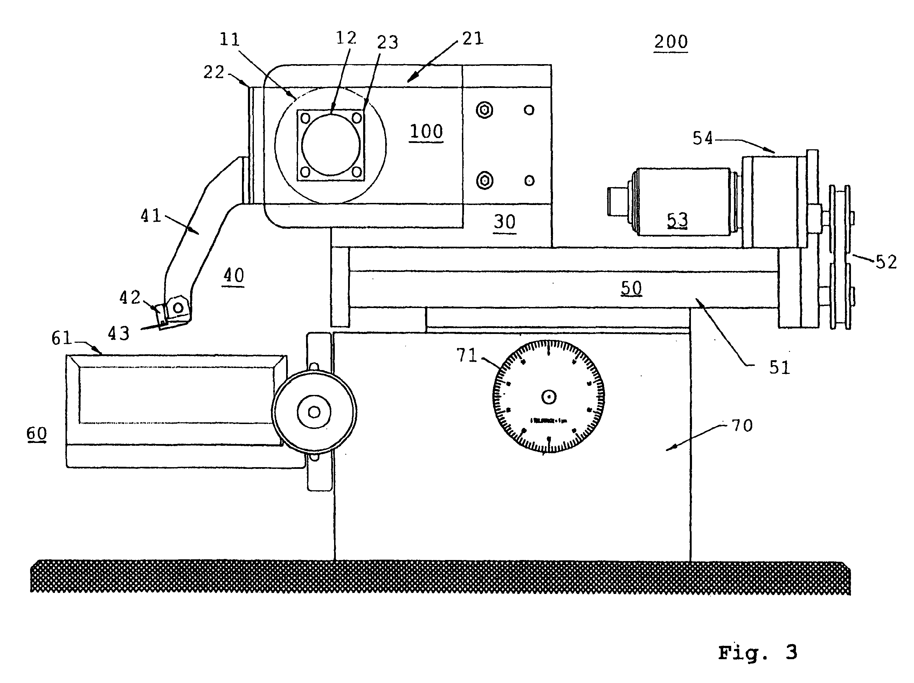

Fig. 3 illustriert in schematischer Seitenansicht ein erfindungsgemäßes Mikrotom 200, das mit der oben erläuterten Antriebseinrichtung 100 ausgestattet ist. Die Antriebseinrichtung 100 ist entsprechend dem in den Figuren 1 und 2 erläuterten Ausführungsbeispiel aufgebaut. In Fig. 3 ist insbesondere der Schwingarm 21 mit dem Befestigungsflansch 23, die Tauchspule 12, der Permanentmagnet 11 (gestrichelt) und der Träger 30 illustriert. Am freien Ende 22 des Schwingarms 21 ist ein Werkzeug 40 befestigt. Das Werkzeug 40 umfaßt eine Schwinggabel 41, die einen Ausleger für die Schneide bildet. Am Ende des Auslegers ist der Messerhalter 42 mit der Schneide 43 angebracht. Der Messerhalter 42 ist relativ zur Schwinggabel 41 verschwenkbar angebracht. Mit der Antriebseinrichtung 100 ist die horizontal ausgerichtete Schneide 43 in der Schwingungsrichtung senkrecht zur Zeichenebene oszillierend beweglich.

Im übrigen umfaßt das Mikrotom 200 eine Vortriebseinrichtung 50 und einen Präparationsbereich 60, die an einem Hubtisch 70 angebracht sind. Die Vortriebseinrichtung 50 enthält einen an sich bekannten Lineartisch 51, der über eine Spindel, ein Getriebe 52 und einen Gleichstrommotor 53 angetrieben wird. Der Gleichstrommotor ist mit einer Gleichstrom-Tachoeinheit 54 ausgestattet. Eine Drehzahlregelung ist durch Bereitstellung einer großen Getriebeuntersetzung von rund 200:1 nicht erforderlich. Die Gleichstrom-Tachoeinheit erzeugt eine Gleichspannung, die proportional zur Vorschubgeschwindigkeit ist und beispielsweise über ein Digitalvoltmeter angezeigt wird.

Der Präparationsbereich 60 umfaßt eine Präparatwanne 61, in der das zu bearbeitende Objekt, zum Beispiel biologisches Gewebe, untergebracht ist. An Stelle der Wanne 61 kann auch jede andere Form eines Probenträgers vorgesehen sein (z. B. eine Plattform oder eine Klemmhalterung). Mit einer Stelleinrichtung 71 am Hubtisch 70 wird die Höhe der Schneide 43 relativ zur Präparatwanne 61 eingestellt. Zur Grobeinstellung kann der Präparationsbereich 60 zusätzlich relativ zum Hubtisch 70 verschiebbar sein. Die Stelleinrichtung 71 ist beispielsweise eine Mikrometerschraube. Beim dargestellten Beispiel entspricht ein Teilstrich 1 µm.

Zum Einsatz des Mikrotoms 200 wird eine Probe in der Präparatewanne 61 positioniert. Mit der Vortriebseinrichtung 50 wird die Schneide 43 zu einem Ausgangspunkt zurückgefahren. Dann wird mit der Stelleinrichtung 71 die gewünschte Höhe der Schneide eingestellt. Die Antriebseinrichtung 100 wird betätigt, so daß die Schneide 43 horizontale Schwingungen ausführt. Simultan wird die oszillierende Schneide 43 mit der Vortriebseinrichtung 50 durch die Probe gefahren, so daß ein Schnitt der Probe sich abhebt und auf der Schneide 43 aufliegt.

Als Schneide 43 kann jedes geeignete Schnittwerkzeug, zum Beispiel eine Rasierklinge, verwendet werden. Zur optimalen Ausnutzung der im wesentlichen höhenschlagfreien Schwingfähigkeit der erfindungsgemäßen Antriebseinrichtung wird jedoch eine Schneide aus einem unbiegsamen Material, zum Beispiel ein Keramikmesser, bevorzugt.

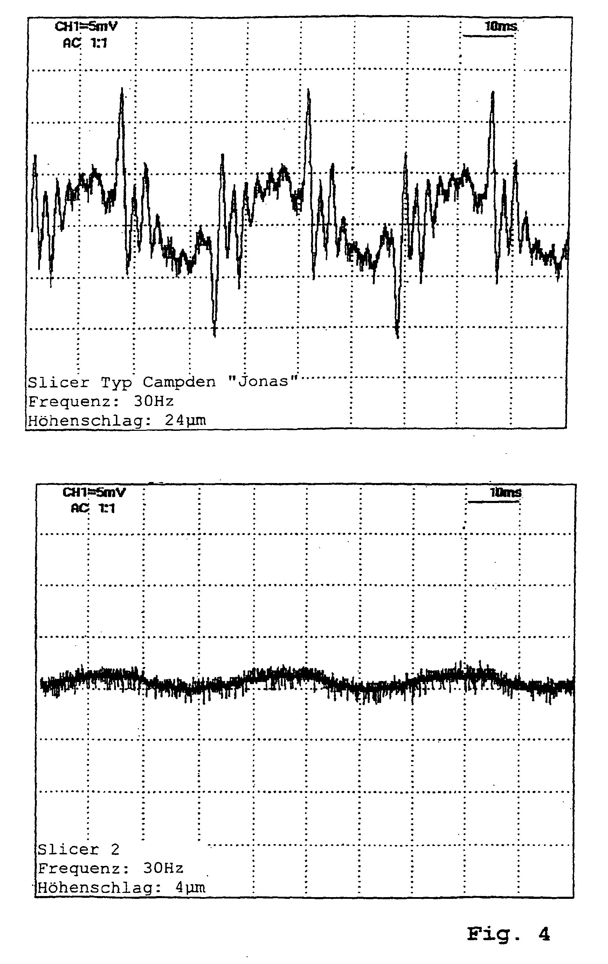

Ein wichtiger Vorteil der Erfindung, nämlich die erhebliche Verringerung des Höhenschlags der Schneide, ist in Fig. 4 illustriert. Mit einem berührungslosen induktiven Wegsensor (z. B. Sensor-System IS 115, Fa. Micro-Epsilon) wurden die vertikalen Vibrationen der Schneide eines herkömmlichen (mit Exzenterantrieb, oben) und eines erfindungsgemäßen (unten) Mikrotoms zeitlich erfaßt. Die Kurvendarstellungen zeigen für das herkömmliche Mikrotom einen Höhenschlag von rd. 24 µm. Der Höhenschlag der Schneide beim erfindungsgemäßen Mikrotom liegt im Frequenzbereich von 30 bis 130 Hz mit einer Amplitude von 1 mm bei 5 bis 2 µm.

Bei alternativen Anwendungen wird die erfindungsgemäße Antriebseinrichtung zur Betätigung von Werkzeugen oder Manipulatoren für die Mikrosystemtechnik oder von mikrochirurgischen Werkzeugen oder Instrumenten verwendet. Es können auch mehrere Antriebseinrichtungen miteinander kombiniert werden, in dem der Träger einer ersten Antriebseinrichtung selbst mit einer weiteren Antriebseinrichtung in Schwingung versetzt wird, um variable Schwingungsrichtungen oder periodische Bewegungen des Werkzeugs oder Manipulators entlang vorbestimmter Kurvenbahnen zu erzeugen.

## Patentansprüche

1. Antriebseinrichtung (100), die als Schwingungsantrieb für ein Werkzeug oder einen Manipulator ausgelegt ist und einen Krafterzeuger (10) und ein Kraftübertragungselement (20) aufweist, das eine Halterung für das Werkzeug oder den Manipulator bildet und das mit dem Krafterzeuger (10) in einer vorbestimmten Schwingungsrichtung (S) beweglich ist, wobei der Krafterzeuger (10) eine Kombination aus einem Permanentmagnetteil (11) und einem Spulenteil (12) umfasst,
**dadurch gekennzeichnet, dass**
das Kraftübertragungselement (20) durch einen Schwingarm (21) gebildet wird, der aus einem streifenförmigen, flächigen, elastischen Material besteht, das ein U-förmiges Profil besitzt, dessen offenes Ende an einem Träger (30) befestigt ist und dessen entgegengesetztes, geschlossenes, freies Ende in der Schwingungsrichtung elastisch verbiegbar und in allen anderen Richtungen steif ist, und dass
von dem Permanentmagnetteil (11) und dem Spulenteil (12) jeweils ein Teil ortsfest am Träger (30) und das andere Teil am Schwingarm (21) befestigt ist, wobei
am Kraftübertragungselement (20) ein Biegesensor (24) zur Erfassung der Schwingungsamplitude des Kraftübertragungselements (20) vorgesehen ist.

2. Antriebseinrichtung gemäß Anspruch 1, bei der das Permanentmagnetteil ein Topfmagnet (11) ist, der am Träger (30) befestigt ist, und das Spulenteil eine Tauchspule (12) ist, die am Kraftübertragungselement (20) befestigt ist

3. Antriebseinrichtung gemäß einem der vorhergehenden Ansprüche, bei dem das Spulenteil (12) elektrisch mit einer Versorgungseinrichtung verbunden ist, die einen Schwingungsgenerator zur-Erzeugung einer vorbestimmten Ausgangsfrequenz zur Anregung des Spulenteils (12) enthält.

4. Antriebseinrichtung gemäß Anspruch 3, bei dem der Schwingungsgenerator zur Erzeugung einer Ausgangsfrequenz ausgelegt ist, die ungleich der Eigenfrequenz des Kraftübertragungselements (20) ist.

5. Antriebseinrichtung gemäß einem der vorhergehenden Ansprüche, bei der das Werkzeug ein Schneidwerkzeug (43) eines Mikrotoms (200) ist.

6. Antriebseinrichtung gemäß Anspruch 5, bei dem als Schneidwerkzeug ein Keramikmesser (43) vorgesehen ist.

7. Verfahren zur Schwingungserzeugung mit einer Antriebseinrichtung gemäß einem der Ansprüche 1 bis 6,
bei dem das Spulenteil (12) des Krafterzeugers (10) mit einer Anregungsfrequenz beaufschlagt wird, die ungleich der Eigenfrequenz des Kraftübertragungselements (20) ist, und
bei dem das Spulenteil (12) unter Einstellung elektrischer Parameter angeregt wird, die in einem Regelkreis unter Verwendung des Biegesensors (24) ermittelt werden.

8. Mikrotom (200), das mit einer Antriebseinrichtung (100) gemäß einem der Ansprüche 1 bis 6 ausgestattet ist.

9. Mikrotom gemäß Anspruch 8, bei dem ein Regelkreis zur Einstellung einer vorbestimmten Schwingungsamplitude und/oder -frequenz des Schneidwerkzeugs vorgesehen ist, der den Biegesensor (24) enthält.

10. Verwendung einer Antriebseinrichtung gemäß einem der Ansprüche 1 bis 4 als Antrieb in einem mikrochirurgischen Instrument oder einem Werkzeug zur Materialbearbeitung in Mikrosystemen.

## Claims

1. Drive unit (100), which is designed as vibration drive for a tool or a manipulator and has a power generator (10) and a power transmission element (20), which forms a mounting for the tool or the manipulator and which is movable with the power generator (10) in a predetermined vibration direction (S), wherein the power generator (10) comprises a combination of a permanent magnet part (11) and a coil part (12),
**characterised in that** the power transmission element (20) is formed by a vibrating arm (21), which is made of a strip-shaped plane elastic material having a U-shaped profile, the open end of which is fastened to a support (30) and the opposite closed free end of which is elastically bendable in the vibration direction and is rigid in all other directions,
and that of the permanent magnet part (11) and the coil part (12) respectively one part is fastened to be fixed on the support (30) and the other part is fastened on the vibrating arm (21),
wherein a bending sensor (24) is provided on the power transmission element (20) to detect the vibration amplitude of the power transmission element (20).

2. Drive unit according to Claim 1, in which the permanent magnet part is a pot magnet (11), which is fastened to the support (30), and the coil part is a moving coil (12), which is fastened to the power transmission element (20).

3. Drive unit according to one of the preceding claims, in which the coil part (12) is electrically connected to a supply unit, which contains a vibration generator to generate a predetermined output frequency for excitation of the coil part (12).

4. Drive unit according to Claim 3, in which the vibration generator is designed to generate an output frequency differing from the natural frequency of the power transmission element (20).

5. Drive unit according to one of the preceding claims, in which the tool is a cutting tool (43) of a microtome (200).

6. Drive unit according to Claim 5, in which a ceramic blade (43) is provided as cutting tool.

7. Method for vibration generation with a drive unit according to one of Claims 1 to 6, in which the coil part (12) of the power generator (10) is subjected to an excitation frequency, which differs from the natural frequency of the power transmission element (20), and in which the coil part (12) is excited to adjust electrical parameters, which are determined in a control circuit using the bending sensor (24).

8. Microtome (200), which is equipped with a drive unit (100) according to one of Claims 1 to 6.

9. Microtome according to Claim 8, in which a control circuit, which contains the bending sensor (24), is provided for adjustment of a predetermined vibration amplitude and/or frequency of the cutting tool.

10. Use of a drive unit according to one of Claims 1 to 4 as drive in a microsurgical instrument or a tool for machining material in microsystems.

## Revendications

1. Dispositif d'entraînement (100) qui est conçu comme un entraînement d'oscillations pour un outil ou un manipulateur et qui comporte un générateur d'énergie (10) et un élément de transmission d'énergie (20) qui constitue une fixation pour l'outil ou le manipulateur et qui est déplaçable avec le générateur d'énergie (10) dans une direction d'oscillation prédéterminée (S), dans lequel le générateur d'énergie (10) comprend une combinaison constituée d'une partie d'aimant permanent (11) et d'une partie de bobine (12),
**caractérisé en ce que**
l'élément de transmission d'énergie (20) est formé par un bras oscillant (21) qui est fait en une matière élastique plate en forme de bande, qui est muni d'un profilé en forme de U dont l'extrémité ouverte est fixée à un support (30) et dont l'extrémité opposée fermée libre est déformable élastiquement dans la direction d'oscillation et rigide dans toutes les autres directions, et **en ce que**
une partie de la partie d'aimant permanent (11) et de la partie de bobine (12) est fixée de manière stationnaire au support (30) et l'autre partie est fixée au bras oscillant (21), moyennant quoi
un capteur de flexion (24) est prévu sur l'élément de transmission d'énergie (20) pour la détection de l'amplitude d'oscillation de l'élément de transmission d'énergie (20).

2. Dispositif d'entraînement selon la revendication 1, dans lequel la partie d'aimant permanent est un aimant cuirassé (11) qui est fixé au support (30) et la partie de bobine est une bobine mobile (12) qui est fixée à l'élément de transmission d'énergie (20).

3. Dispositif d'entraînement selon l'une quelconque des revendications précédentes, dans lequel la partie de bobine (12) est reliée électriquement à un dispositif d'alimentation qui contient un générateur d'oscillations pour la génération d'une fréquence de sortie prédéterminée pour l'excitation de la partie de bobine (12).

4. Dispositif d'entraînement selon la revendication 3, dans lequel le générateur d'oscillations est conçu pour la génération d'une fréquence de sortie qui n'est pas égale à la fréquence propre de l'élément de transmission d'énergie (20).

5. Dispositif d'entraînement selon l'une quelconque des revendications précédentes, dans lequel l'outil est un outil de coupe (43) d'un microtome (200).

6. Dispositif d'entraînement selon la revendication 5, dans lequel il est prévu une lame en céramique (43) comme outil de coupe.

7. Procédé pour la génération d'oscillations avec un dispositif d'entraînement selon l'une quelconque des revendications 1 à 6, dans lequel la partie de bobine (12) du générateur d'énergie (10) est alimentée avec une fréquence d'excitation qui n'est pas égale à la fréquence propre de l'élément de transmission d'énergie (20) et dans lequel la partie de bobine (12) est excitée en réglant des paramètres électriques qui sont détectés dans un circuit de régulation à l'aide de capteur de flexion (24).

8. Microtome (200) qui est équipé d'un dispositif d'entraînement (100) selon l'une quelconque des revendications 1 à 6.

9. Microtome (200) selon la revendication 8, dans lequel il est prévu un circuit de régulation pour le réglage d'une amplitude et/ou d'une fréquence d'oscillation prédéterminée de l'outil de couple qui contient le capteur de flexion (24).

10. Utilisation d'un dispositif d'entraînement selon l'une quelconque des revendications 1 à 4 comme entraînement dans un instrument de microchirurgie ou dans un outil pour l'usinage de matière dans des microsystèmes.
